# EUROPEAN PATENT APPLICATION

(11) **EP 1 178 283 A1**
(43) Date of publication of application: **06.02.2002**
(21) Application number: 00830541.9
(22) Date of filing: 31.07.2000
(51) Int. Cl.: G01C 11/02

(54) **Airborne spectroscopic digital camera imaging system**

(71) Applicant: CO.RI.AL. Consorzio Ricerche Alimentari S.C.p.A., 71100 Foggia (IT)
(72) Inventor: Ranieri, Roberto, 43052 Colorno (Parma) (IT); Ronchi, Cesare, 00135 Roma (IT); Valentini, Riccardo, 01100 Viterbo (IT)
(74) Representative: Botti, Mario

(57) **Abstract**

The invention relates to a method and an apparatus (1) for obtaining very high resolution spectroscopic aerial photography images, the apparatus comprising at least a pair of cameras mounted on an aircraft (18) which is intended for flying over intensively cultivated (19) land (20), and comprising an electronic control means of the cameras shutter release. Advantageously, each camera includes digital detection optics (2) brought to operate by means (12)for simultaneously obtaining images and for immediately making available the images in a digital format. The digital format images are stored into the memory of an electronic processor for later ground-based processing in order to have them compared with previously acquired reference images.

## Description

### Field of the Invention

This invention relates to a method and an apparatus for obtaining very high resolution spectroscopic aerial photography images.

The invention relates in particular to an apparatus for obtaining very high resolution spectroscopic aerial photography images comprising at least a pair of cameras mounted on an aircraft which is intended for flying over intensively cultivated land, and electronic means for controlling the shutters of said cameras.

As it is well known in the pertinent art, during some periods of the year it is necessary to exercise a precise control over the state of some cultivation, e.g. the state of large plots of wheat or corn cultivated land.

This derives from the need of periodically checking the rate of growth of certain cultivation, in order to take preventive or curative steps in case possible problems arise.

Such is the case with the possible effects of long periods of drought, which can lead to the water stressing of cultivation or vegetation in general, as well as with the problems related to parasite attacks or diseases which may adversely affect the cultivation growth and/or impair crops.

Any time critical situations occur, it would be therefore desirable providing timely information on the cultivation state so that any possible remedy can be set before it is too late. Furthermore, this information should be as objective as possible and on scientific bases, so that they are free of any assessment mistake due to the background experience of the operators.

### Prior Art

Airborne systems for fire prevention and survey are known. An example of such systems is disclosed in the European Patent Application No. 0 811 400.

The system described in that Application is designed to survey the inflammability of a portion of the overflown. area.

Fire risk depends on several factors, including structure and denseness of vegetation, plant variety, soil water deficit, and possible elevated-temperature spots.

The system described in that Application is essentially based on three spectral images, respectively in the red, near-infrared, and infrared bands. Imaging is made possible by three separate airborne TV cameras.

An image processing apparatus allows the three different images of the same area to be combined with each other, in order to detect different features of or injuries to the vegetation, which reveal the danger for or the presence of fire.

While being in several ways advantageous and substantially achieving its objective, this detecting system is not suitable to take images in applications other than fire prevention.

Another solution deriving from the prior art is a system known as MIVIS (Multispectral Infrared and Visible Imaging Spectrometer), which consists of a complex detecting apparatus for obtaining spectroscopic images in over one hundred bands of the spectrum.

The latter system comprises: a power supply unit, a computer-controlled video recorder, a computer-controlled monitor with oscilloscope, a digitalizer, and a spectroscopic scanner. These components are interconnected with each other by bundled wires.

The scanner comprises specific optical elements, including a telescope, a rotating scan mirror, a power-driven encoder, and heat and infrared sensors.

The light amount of the taken image is picked up by the scan mirror and focused onto a paraboloid to be directed towards a spectrometer, which allows to take images in the visible band (20 channels), in the near-infrared band (8 channels), in the middle of the infrared band (64 channels), and in the thermal region of the infrared band (10 channels).

The digitalizer allows to perform the conversion from analog to digital images and to forward data to the video recorder.

The MIVIS system is extremely complicated and expensive, and almost exclusively suitable for use by important research institutes and governmental agencies for monitoring critical geographic areas as volcanic regions, sea coasts, dumping sites, archeological sites, and urban areas. The MIVIS system for cultivation monitoring, additionally to being uneconomical, does not allow to take adequately flexible images, especially as flight conditions vary.

The underlying technical problem of this invention is to provide a method and a related apparatus for obtaining very high resolution aerial spectroscopic images, which method and apparatus have functional and structural features whereby spectroscopic images of the same overflown area or region can be taken in succession by altering, from the aircraft itself, some imaging parameters as exposure time, imaging speed, and spectral band selection. These features should be all provided by a uniquely simple, compact and cost-effective apparatus capable of overcoming the drawbacks of the aforementioned prior art apparatus.

### Summary of the Invention

The principle at the basis of the present invention is that of simultaneously obtaining spectroscopic images, which are at once made available in a digital format by virtue of an A/D conversion performed within the photographic apparatus.

This is made possible by an A/D converter having a CDS programmable at an amplification gain of at least 256.

Based on this principle, the technical problem is solved by an apparatus as previously indicated and defined in the characterizing portion of Claim 1.

The invention further relates to a method as defined in Claim 9.

The features and advantages of the method and the apparatus of this invention will be more clearly apparent from the following description of non-limitative embodiments thereof, given with reference to the accompanying drawings.

### In the drawings:

### Brief Description of the Drawings

- Figure 1 shows a perspective and schematic view of an apparatus prototype for implementing the method of this invention.
- Figure 2 shows a schematic view of an application example of the apparatus shown in Figure 1.
- Figure 3 shows a block diagram view of the apparatus shown in Figure 1.

### Detailed Description

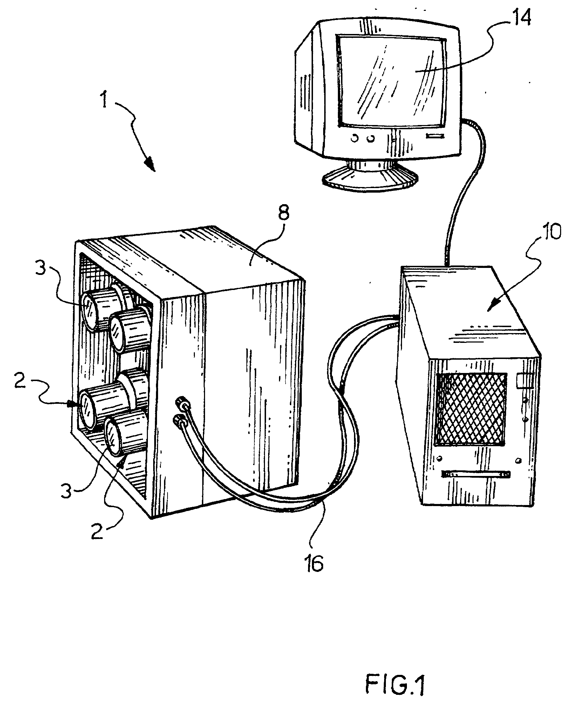

With reference to the drawings, and in particular to the example of Figure 1, an apparatus for obtaining very high resolution spectroscopic aerial photographic images is generally shown at 1 in a schematic form.

The apparatus 1 is part of an airborne spectroscopic photography system and embodies this invention for taking very high radiometric resolution digital spectral photographs.

The apparatus 1 is detachably mounted on an aircraft 18 which is intended to fly over areas 20, cultivated zones or regions 19, and intensive cultivated areas with the purpose of obtaining photographic images of such areas.

For this purpose, the apparatus 1 includes a plurality of digital detection optics 2 which are structurally independent from one another and all of them have sensitivity in the visible-near infrared range, e.g. in the wavelength range of 0.4 to 1.1 micrometers.

In a preferred embodiment, four such optics 2 are provided. However, the apparatus 1 could include another number of optics, or optics having a different type of sensitivity.

As an example and for the sake of completeness, it should be mentioned that each of the optics 2 comprises a digital CCD camera equipped with a reflex objective lens 3, e.g. a 35 mm lens, a pair of electromechanical shutters, e.g. from 1 to 9999 s, and CCD sensors 5 having a resolution of at least 768x512 pixels.

In addition, a 14-bit A/D converter with CDS programmable at at least 256 amplification gain is provided within each camera.

Also provided is a microcontroller electronic means to control the shutters of said cameras. This mean will be described in greater detail hereinafter, in connection with the electronic portion of the apparatus 1.

The optics 2 exhibit high quantum efficiency, close to 90%, and allow to obtain a sufficient amount of light even at exposure times of a fraction of a millisecond in normal conditions of use, that is, daylight and spectral widths of a few tens of nanometers.

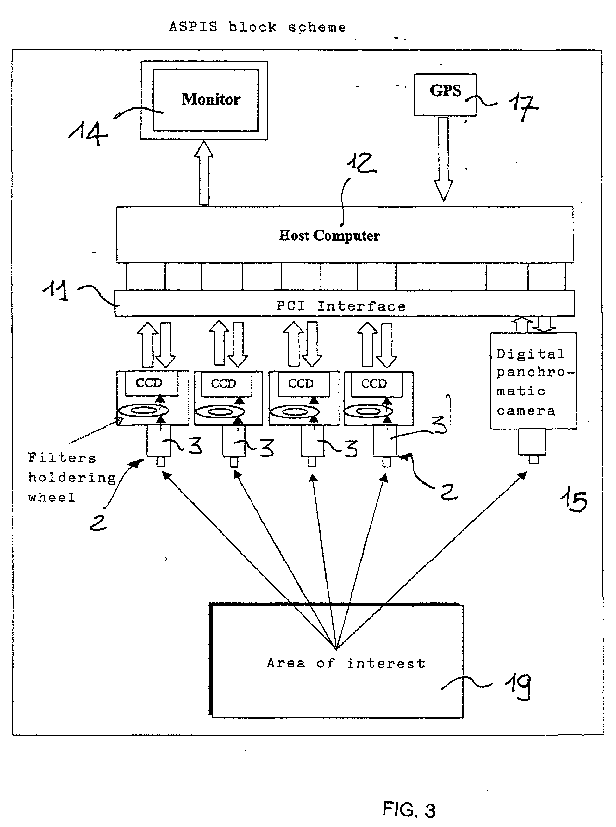

These CCD sensors 5 preferably have a dynamic sensitivity of at least fourteen bits allowing, in the selected band, a conversion of the reflectance values into 16384 shades of grey, so that even very small variations of the different images can be detected. Advantageously, chromatic filters 4 can be removably interposed between each objective lens 3 and the related sensor 5. Specifically, the filters 4 are mounted on an eight-position electromechanical filter holding wheel 6, as schematically shown in Figure 3. In this way, the spectral bands of the obtained spectroscopic images can be selected. By using chromatic filters 4 with bandwidths in the 2 to 40 µm range, suitable images can be obtained for an itemized appraisal of the vegetation characteristics, such as coverage, biomass and chlorophyll content, it being possible to extend the investigation to even take notice of specific pigments and tissue structural elements.

Each electromechanical wheel 6 is interposed between each objective lens 3 and the corresponding sensor 5. The wheels are rotatably mounted inside a protective shroud 8, shown in Figure 1, and are rotatively driven by electric motors, not shown because conventional.

The apparatus 1 is self-powered by a battery and by a suitable voltage regulator.

Each filter holding wheel is activated to rotate, and precisely set in position, by electric signals emitted from a microcontroller 12 included in the apparatus 1.

Alternatively, an electronic processor 10 incorporating the microcontroller 12 may be connected to the apparatus 1 by means of an external connector 16.

Associated with the microcontroller 12 is a PCI-standard interface 11 whereto all the digital sensors 5 are led. Such microcontroller is associated with a non-volatile memory of at least 20-Gbyte capacity.

The microcontroller controls the electromechanical shutters of each optic 2 via the interface 11.

Furthermore, a conventional GPS sensor 17, e.g. a Garmin Ultrasonic type, is connected to the microcontroller 12 to acquire georeference data useful for the images geometrical correction.

Also provided is a gyroscopic sensor, of the vertical type having a continuous elevation, for recording variations in the aircraft trim about the axes x, z. This sensor has a roll (x) recording range of ±90° and a dive (z) recording range of ±60°.

The gyroscopic sensor is connected to the microcontroller through another PCI interface, not shown because conventional.

An airborne monitor 14 simultaneously displays the images taken by the cameras, and appropriate dedicated algorithms enable control of the digital cameras, the GPS sensor, and the gyroscope.

Advantageously, imaging parameters as exposure time, imaging speed, and the selection of spectral bands can be changed in flight through the choice of filters.

In essence, the method of this invention allows the areas being overflown to be imaged or simultaneously photographed by means of the digital detection optics 2, and the digital format images to be stored into the memory associated with the microcontroller 12. Ground-based processing may later be carried out for comparison with previously acquired reference images.

The ground-based geometric resolution of the images so taken will be a function of such flight parameters as altitude and speed.

Optionally, a digital panchro TV camera 15 is connected to the interface 11, and hence to the microcontroller 12, for displaying and concurrently recording images already and simultaneously taken by the spectral cameras 2. This TV camera 15 is equipped with zoom and autofocus facilities, and allows to take scenes with a field of view wider than that of the spectral images, thereby enabling the aircraft course over predetermined areas to be checked thanks to some ground landmarks.

The geometric resolution, fourteen-bit radiometric, temporal and spectroscopic features make the apparatus of this invention an effective tool for monitoring and conning agricultural and forestal resources. In normal conditions of use, that is at an altitude in the 50 to 500 m range, images with a ground-based resolution on the order of 20-70x20-70 cm per pixel can be obtained in accordance with the following table, built upon a cruising speed of 110 km/h of the aircraft.

| Altitude | Area shot | Geometric | resolution |
|---|---|---|---|
| (meters) | (meters) | Height | Length |
| 50 | 35x35 | 5 | 7 |
| 100 | 67x67 | 9 | 13 |
| 200 | 135x135 | 18 | 27 |
| 500 | 350x350 | 50 | 70 |
| 1000 | 670x670 | 90 | 130 |

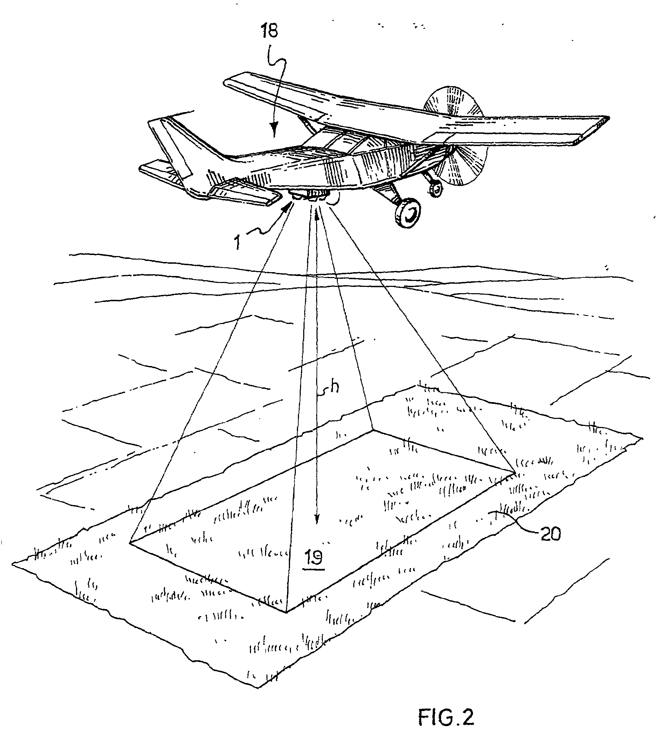

Altitude is schematically indicated as height h in Figure 2.

The apparatus and method of this invention do solve the technical problem and provide spectroscopic photographic images, useful to evaluate factors of major interest in the cultivation treatment, at a reasonable cost.

Also noteworthy is the flexibility inherent to the system -- or rather the system suitability for use in different kinds of surveys -- as flight conditions vary with consequent variations of the overall resolution features.

## Claims

1. An apparatus (1) for obtaining very high resolution spectroscopic aerial photography images, comprising at least a pair of cameras mounted on an aircraft (18) which is intended for flying over areas (20) interested by intensive cultivation (19), **characterized in that** each camera includes digital detection optics (2) brought into operation by said electronic means (12) for simultaneously controlling the shutters of said cameras.

2. An apparatus according to Claim 1, **characterized in that** said images are at once made available in a digital format by an A/D converter incorporated to each still camera.

3. An apparatus according to Claim 1, **characterized in that** said A/D converter is a 14-bit converter with CDS programmable at a gain of at least 256.

4. An apparatus according to Claim 1, **characterized in that** each still camera includes digital CCD sensors (5) having high resolution.

5. An apparatus according to Claim 4, **characterized in that** said CCD sensors (5) have a dynamic sensitiveness of at least fourteen bits.

6. An apparatus according to Claim 4, **characterized in that** it comprises chromatic filters (4) removably interposed between each optic (2) and the related sensors (5).

7. An apparatus according to Claim 1, **characterized in that** said optics (2) have sensitivity in the visible-near infrared range.

8. An apparatus according to Claim 4, **characterized in that** it comprises a microcontroller (12) connected to said sensors (5) and said optics (2) through an interface (11), and comprises a vertical gyroscopic sensor for recording variations in the aircraft trim through a second interface.

9. An apparatus according to Claim 8, **characterized in that** a GPS sensor (17) is also connected to said microcontroller (12) for acquiring georeference data useful for geometric correction of the images.

10. An airborne spectroscopic photography system, **characterized in that** it includes at least one apparatus as claimed in Claims 1 to 9.

11. A method of obtaining very high resolution spectroscopic aerial photography images, **characterized in that** said images are simultaneously obtained or taken photographically through related digital detection optics (2) so as to have the images available at once in a digital format, a storage of the images in the digital format, and a subsequent comparative processing of said images with previously obtained reference images.
